# NOUVEAU FASCICULE DE BREVET EUROPEEN

(11) **EP 0 286 838 B2**
(45) Date de publication et mention de la décision concernant l'opposition: **03.03.1999**
(45) Mention de la délivrance du brevet: 16.01.1991
(21) Numéro de dépôt: 88103846.7
(22) Date de dépôt: 11.03.1988
(51) Int. Cl.: A23L 1/227, A23L 1/231, A23P 1/14

(54) **Procédé de fabrication d'un agent aromatisant**
Verfahren zur Herstellung eines Gewürzmittels
Process for preparing a flavouring ingredient

(30) Priorité: 06.04.1987 CH 1317/87
(43) Date de publication de la demande: 19.10.1988
(73) Titulaire: SOCIETE DES PRODUITS NESTLE S.A., 1800 Vevey (CH)
(72) Inventeur: Heyland, Sven, CH-8534 Weiningen (CH); Rolli, Karl, CH-8400 Winterthur (CH); Röschli, David, CH-8422 Pfungen (CH); Sihver, Jaak Juri, CH-8605 Gutenswil (CH)

(56) Documents cités:
- EP-A- 0 087 769
- EP-A- 0 169 106
- WO-A-84/03420
- CH-C- 563 126
- DE-A- 2 149 700
- DE-A- 2 454 597
- DE-A- 2 461 453
- DE-A- 2 549 391
- FR-A- 2 095 510
- FR-A- 2 206 912
- FR-A- 2 260 957
- FR-A- 2 321 851
- FR-A- 2 554 685
- US-A- 4 245 552

## Description

La présente invention a pour objet un procédé de fabrication d'un agent aromatisant dont le goût rappelle celui de la viande, dans lequel on fait réagir par chauffage un mélange pâteux contenant au moins une source d'acides aminés libres et des additifs comprenant au moins un sucre réducteur,

Dans le domaine de la fabrication d'agents aromatisants dont la saveur doit rappeler celle de la viande cuite ou rôtie, où l'on fait réagir une source d'acide aminé libre telle qu'un hydrolysat de protéines avec un sucre réducteur, on s'est principalement attaché jusqu'ici à choisir et apprêter les matières premières les plus adéquates pour obtenir des saveurs caractéristiques de divers types de viandes et qui ne présentent aucun arrière goût. La réaction elle-même, dite de Maillard, est généralement conduite par chauffage d'un mélange liquide ou pâteux des ingrédients adéquats à une température avoisinant la température d'ébullition de l'eau ou du mélange, durant des temps pouvant compter plusieurs dizaines de minutes à plusieurs heures, dans des récipients courants tels qu'une cuve à double manteau avec agitateur. Il est ensuite généralement prévu un séchage du produit de réaction liquide ou pâteux en conditions douces telles que la réaction ne puisse pas se prolonger, à savoir sous pression réduite, à température modérée, durant des heures. Cette technologie traditionnelle mobilise des installations relativement encombrantes durant des temps relativement longs.

La présente invention a pour but de proposer un procédé nouveau qui puisse être réalisé plus vite avec une installation plus compacte, ainsi qu'un appareil pour la mise en oeuvre de ce procédé.

A cet effet, le procédé de fabrication d'un agent aromatisant selon la présente invention est caractérisée par le fait que l'on mélange, en % en poids, 70―95% d'une source d'acides aminés libres présentant une teneur en eau de 1―3%, 1―25% desdits additifs et de l'eau pour obtenir un mélange pâteux contenant 5―12% d'eau, on plastifie le mélange pâteux par pétrissage et chauffage, on fait réagir le mélange plastifié à une température de 80―140°C sous une pression de 1―100 bar durant 30 s ― 30 min et l'on sèche et refroidit le produit de réaction par extrusion et détente dans une enceinte sous pression réduite de 5―50 mbar.

On a ainsi constaté que la technologie traditionnelle peut être, de manière surprenante, complètement remplacée par une technologie nouvelle qui réduit considérablement les temps, les dépenses d'énergie et l'espace nécessaire a la fabrication d'agents aromatisants par réaction de Maillard d'un mélange pâteux à base d'une source d'acides aminés libres telle qu'un hydrolysat de protéines, On a constaté également que cette économie de temps, d'énergie et d'espace s'accompagne de manière aussi surprenante d'une amélioration radicale des possibilités de contrôle des paramètres du procédé et des caractéristiques du produit obtenu.

L'appareil pour la mise en oeuvre du procédé selon la présente invention est caractérisé par le fait qu'il comprend un dispositif de mélange en continu, un dispositif de pétrissage et chauffage en continu et un dispositif d'extrusion débouchant dans une enceinte reliée à de moyens de pompage, le dispositif de mélange en continu comprend un premier secteur de chargement en ingrédients secs et un deuxième secteur de chargement en ingrédients liquides d'une extrudeuse à vis simple ou double et le dispositif de pétrissage et chauffage en continu comprend au moins un troisième secteur de pétrissage et chauffage de ladite extrudeuse, chaque secteur étant pourvu d'un double manteau indépendant, et le dispositif d'extrusion comprend au moins un dernier secteur de ladite extrudeuse enveloppé d'un double manteau indépendant, au moins un tube de chauffage relié à l'extrudeuse et enveloppé d'un double manteau, ainsi qu'une filière d'extrusion reliée au tube de chauffage, ce dernier étant rempli d'éléments géométriques de mélange statique

Le présent procédé peut donc être mis en oeuvre à l'aide d'un appareil simple et compact dont le fonctionnement de chaque élément peut être contrôlé de manière aisée et directe qui contraste avec l'inertie d'une cuve traditionnelle de mélange et chauffage par exemple.

Pour mettre en oeuvre le procédé selon la présente invention, on peut choisir la source d'acides aminés parmi les matières premières les plus couramment utilisées à ce titre dans ce type d'industrie, notamment les hydrolysats acides ou enzymatiques de matières riches en protéines végétales ou animales telles que les tourteaux d'oléagineux, les résidus de sucraterie, les germes de céréales, le sang ou les abats par exemple, ainsi que les extraits ou autolysats de micro-organismes riches en protéines tels que les levures de bière ou de boulangerie ou certaines bactéries cultivées sur des substrats à base d'hydrocarbure par exemple.

Dans une forme de réalisation préférée du présent procédé, on utilise une source d'acides aminés comprenant, en % en poids dudit mélange, 40―95% d'un hydrolysat de protéines et 0―30% d'un extrait de levure. Dans cette forme de réalisation, on peut utiliser par exemple un hydrolysat de protéines végétales obtenu par cuisson à l'acide chlorhydrique de tourteaux d'oléagineux, neutralisation et filtration, seul ou en combinaison avec un extrait ou autolysat de levure obtenu par hydrolyse à l'aide des enzymes naturelles des levures et séparations des insolubles.

Lesdits additifs peuvent comprendre, outre ledit sucre réducteur, une substance contenant du soufre et des arômes ou renforçateurs d'arômes tels que des épices ou des extraits d'épices, notamment de l'extrait d'oignon ou de la poudre d'ail, ainsi que des nucléotides, notamment l'inosine monophosphate, ou encore du glutamate ou de l'acide citrique par exemple, ou enfin des acides ou bases alimentaires destinés à un ajustement éventuel du pH du mélange pâteux au cas où il sortirait exceptionnellement d'un domaine préféré de environ 4―8.

Dans une forme de réalisation préférée du présent procédé, on utilise des additifs comprenant, en % en poids dudit mélange, 0,5―10% d'un sucre réducteur, 0,5―10% d'une substance contenant du soufre, 0―20% de glutamate monosodique et 0―5% d'inosine monophosphate. Le sucre réducteur peut être par exemple un pentose ou un hexose, notamment le xylose, l'arabinose, le fructose ou le glucose ou un mélange d'entre eux, ou encore un acide uronique, notamment l'acide galacturonique. La substance contenant du soufre peut être choisie dans le groupe comprenant la cystéine, la cystine, la méthionine, la thiamine et leur mélanges par exemple.

On peut incorporer en outre audit mélange, en % en poids du mélange, 0―40% de maltodextrine et 0―15% de graisse. Si l'on incorpore plus de 15% de graisse au mélange, on risque d'une part que les qualités d'écoulement libre d'un prémélange des ingrédients secs se perdent et d'autre part que la graisse se sépare du produit de réaction à la sortie de l'extrudeuse. La source d'acides aminés libres utilisée dans le présent procédé présentant donc une teneur en eau de environ 1―3% et lesdits additifs étant également secs, la quantité d'eau ou d'une solution aqueuse de certains additifs à ajouter pour obtenir un mélange pâteux contenant 5―12% d'eau est faible et peut être de environ 5―10%.

Les opérations de mélange des ingrédients secs et d'un peu d'eau, plastification du mélange pâteux par pétrissage et chauffage, réaction et extrusion en enceinte sous pression réduite peuvent être réalisés avantageusement en continu et s'enchaîner en sorte que leur durée totale soit de l'ordre de quelques minutes à une dizaine de minutes. Lors de sa plastification, le présent mélange pâteux se transforme en une pâte homogène, lisse et malléable à chaud qui peut présenter une viscosité de environ 14000 mPs à 100°C ou 3400 mPs à 120°C par exemple. Cette pâte est par contre solide à froid.

La réaction elle-même est réalisée à une température de 80―140°C sous une pression de 1―100 bar durant 30 s ― 30 min. A une température inférieure à 80°C, la réaction n'est pas assez rapide pour s'achever dans le laps de temps prévu. A une température supérieure à 140°C, la réaction peut s'accompagner d'une dégradation des composants et fournir un produit dont le goût rappelle celui d'une viande trop rôtie. Dans une forme de réalisation préférée du présent procédé, on fait réagir le mélange plastifié à une température de 80―125°C et l'on ajuste sa température à 125―140°C juste avant de l'extruder, De cette manière, l'essentiel de la réaction peut se faire à une température relativement modérée et un supplément d'énergie thermique n'est fourni qu'au dernier moment pour renforcer l'effet de séchage et refroidissement par extrusion et détente dans une enceinte sous pression réduite. Ceci permet également d'ajuster de manière précise la teneur en humidité résiduelle du produit de réaction extrudé sans influencer le processus de réaction lui-même. Une augmentation de 10°C de la température de la pâte juste avant l'extrusion provoque par exemple la vaporisation de environ 0.8% d'eau supplémentaire lors de l'extrusion dans l'enceinte sous pression réduite.

Si la réaction se déroule à une pression située dans le bas du domaine indiqué de 1―20 bar, il est préférable de prévoir une élévation de la pression après la réaction proprement dite pour renforcer également l'effet de séchage et refroidissement par extrusion et détente dans une enceinte sous pression réduite. Par contre, si la réaction se déroule à une pression située dans le milieu ou le haut du domaine indiqué, celle-ci sera également suffisante pour obtenir ensuite un effet de séchage et refroidissement adéquat. Enfin, si la réaction se déroule à une pression supérieure à 20 bar, cela peut signifier que le mélange pâteux plastifié n'est pas animé d'un mouvement assez rapide et risque de brûler.

Lors de l'opération de séchage et refroidissement, on peut d'une part éliminer toute l'eau que l'on a ajoutée à la pâte, à savoir environ 5―10% d'eau, et d'autre part refroidir le produit de réaction à une température suffisamment basse pour que la réaction s'arrête. Lors de l'extrusion, le boudin de pâte qui débouche dans l'enceinte sous pression réduite gonfle ou s'expanse fortement sous l'effet de la vaporisation de l'eau ajoutée qu'il contient et de la détente de cette vapeur. En s'échappant de la pâte dont elle a provoqué I'expansion, cette vapeur emporte la chaleur latente de vaporisation, ce qui se traduit par un brusque refroidissement du boudin expansé. On peut obtenir ainsi une chute de température de 125―140°C à 50―60°C par exemple.

On maintient donc une pression réduite de 5―50 mbar dans l'enceinte où l'on extrude la pâte. Le maintien d'une pression inférieure à 5 mbar entraîne une dépense d'énergie inutilement élevée et comporte le risque d'un blocage de I'extrusion par une expansion trop forte de la pâte commençant trop tôt dans la filière d'extrusion. Le maintien d'une pression supérieure à 50 mbar, telle que par exemple 60―80 mbar risque de créer des problèmes du fait que le boudin ne se refroidit pas suffisamment, il reste thermoplastique, il ne s'expanse pas assez et il se sèche moins bien. Le présent procédé peut en effet permettre d'obtenir un produit de réaction extrudé expansé présentant une teneur en humidité résiduelle de 1―3%. Un dépassement de 10 mbar du domaine de pression indiqué dans ladite enceinte peut provoquer une augmentation de environ 0,3% de cette teneur en humidité résiduelle.

Le présent produit de réaction extrudé expansé peut présenter une densité apparente de environ 100―200 g/l. Mais on broye de préférence ce produit de manière à pouvoir le présenter sous forme d'une poudre ou d'un granulé présentant une densité apparente de environ 45―750 g/l. Cette densité apparente peut être ajustée non seulement par la finesse de la mouture, notamment par l'ouverture des mailles de la grille d'un moulin à marteaux par exemple, mais également par la pression maintenue dans ladite enceinte. C'est ainsi que pour un broyage avec un moulin à marteaux muni d'une grille à mailles de 2 mm, on peut faire varier la densité apparente de ladite poudre de 460―600 g/l en faisant varier la pression dans ladite enceinte de 15―50 mbar par exemple.

L'appareil pour mettre en oeuvre le procédé selon la présente invention comprend donc un dispositif de mélange en continu, un dispositif de pétrissage et chauffage en continu et un dispositif d'extrusion débouchant dans une enceinte reliée à des moyens de pompage. Comme on l'a vu ci-dessus, cet appareil peut être réalisé de diverses manières que l'on peut ranger en deux formes préférées principales qui se distinguent principalement par le fait que le dispositif de pétrissage et chauffage en continu est ou n'est pas capable de fournir lui-même la pression nécessaire au moins pour l'extrusion.

Dans la première forme de réalisation préférée présentée ci-dessus, l'appareil comprend donc deux convoyeurs à vis d'archimède suivis d'une pompe précédant la filière d'extrusion, alors que dans la seconde forme de réalisation préférée présentée ci-dessus, l'appareil comprend une extrudeuse à simple ou double vis comportant plusieurs secteurs successifs pourvus chacun d'un double manteau indépendant.

En ce qui concerne cette seconde forme préférée de réalisation, ledit dispositif d'extrusion peut être constitué par la partie avant de l'extrudeuse elle-même, autrement dit comprendre au moins un dernier secteur à double manteau indépendant et une filière d'extrusion de l'extrudeuse. Mais il peut aussi comprendre des éléments supplémentaires permettant de dissocier la température de réaction de la température d'extrusion,

Le dispositif d'extrusion comprend au moins un dernier secteur de ladite extrudeuse enveloppé d'un double manteau indépendant, au moins un tube de chauffage relié à l'extrudeuse et enveloppé d'un double manteau, ainsi qu'une filière d'extrusion reliée au tube de chauffage, Ce dernier est rempli d'éléments géométriques de mélange statique destinés à brasser le flux de pâte pour améliorer la rapidité et l'homogénéité du transfert de chaleur, et pour empêcher l'immobilisation de la pâte en des points morts du tube.

Dans cette dernière forme d'exécution de l'appareil où le dispositif d'extrusion est prolongé audela de l'extrudeuse, ledit dispositif de pétrissage et chauffage en continu peut comprendre en outre un tube d'attente à double manteau branché entre l'extrudeuse et le tube de chauffage. Ce tube d'attente est de préférence aussi rempli d'éléments géométriques de mélange statique. Son diamètre est choisi de préférence assez grand pour que la vitesse axiale moyenne de la pâte y soit semblable à la vitesse axiale moyenne de la pâte dans l'extrudeuse.

Il est certain que l'introduction d'éléments géométriques de mélange statique dans le tube d'attente et le tube de chauffage, voire dans la filière d'extrusion elle-même peut engendrer de fortes pertes de charge, autrement dit absorber une forte proportion de la pression engendrée par ladite pompe ou par ladite extrudeuse. Cet effet peut être particulièrement marqué dans le tube de chauffage dont le diamètre est choisi de préférence assez petit pour assurer un rapide transfert de chaleur. Pour contrecarrer au moins en partie cet effet, on peut avantageusement couper le tube de chauffage en plusieurs éléments et brancher ces éléments en parallèle.

L'appareil pour la mise en oeuvre du présent procédé est décrit ci-après en référence au dessin annexé dans lequel:
la figure 1 représente schématiquement une première forme de réalisation de l'appareil,
la figure 2 représente schématiquement une seconde forme de réalisation de l'appareil, et
la figure 3 représente schématiquement et partellement une variante de la forme de réalisation de l'appareil selon la figure 2.

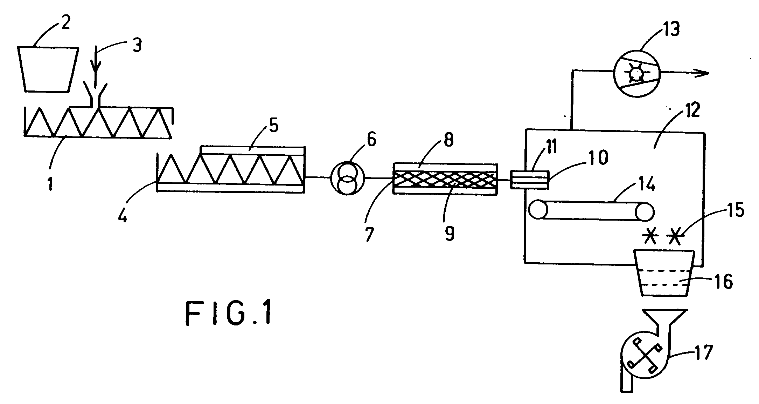

L'appareil représenté à la figure 1 comprend un dispositif de mélange en continu 1―3, un dispositif de pétrissage et chauffage en continu 4,5 et un dispositif d'extrusion 6―11 débouchant dans une enceinte 12 reliée à des moyens de pompage 13.

Le dispositif de mélange en continu comprend un convoyeur,

à vis d'archimède 1 surmonté d'une trémie d'alimentation 2 en ingrédients pulvérulents et d'une conduite 3 d'alimentation en ingrédient liquide.

Le dispositif de pétrissage et chauffage en continu comprend un convoyeur à vis d'archimède 4 à double manteau 5 chauffable par circulation d'huile chaude.

Le dispositif d'extrusion comprend une pompe positive 6, un tube de chauffage 7 à double manteau 8 rempli d'éléments géométriques De mélange statique 9 constitués de croisillons métalliques imbriqués les uns dans les autres, et une filière 10 constituée d'un court segment de tube cylindrique à double manteau 11.

L'enceinte 12 est reliée à des moyens de pompage constitués d'une pompe à palette 13. Elle renferme l'extrémité aval de la filière 11, une bande transporteuse 14 et un prébroyeur 15. Elle est reliée avec l'extérieur par un sas 16 débouchant sur un moulin à marteaux 17.

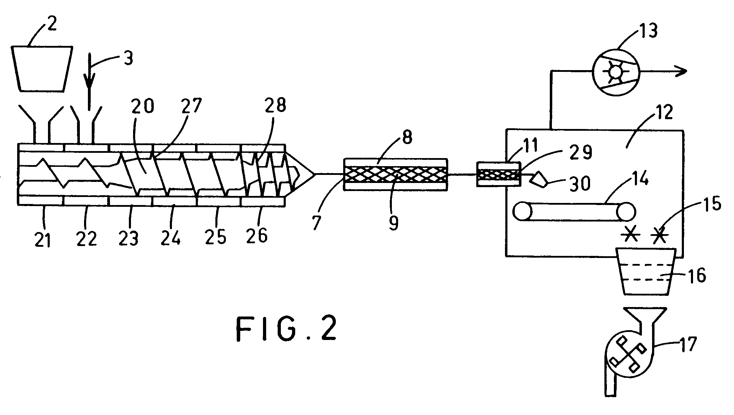

Dans l'appareil représenté a la figure 2, le dispositif de mélange en continu comprend un premier secteur 21 de chargement en ingrédients secs et un deuxième secteur 22 de chargement en ingrédient liquide d'une extrudeuse à double vis 20 dont les six secteurs sont pourvus chacun d'un double manteau indépendant. Dans ces deux premiers secteurs, les vis 20 sont très ouvertes et sont simplement agencées de manière à brasser le mélange et à le faire avancer dans l'extrudeuse.

Le dispositif de pétrissage et chauffage en continu comprend ici les troisième, quatrième et cinquième secteurs 23, 24 et 25 de l'extrudeuse dans lesquels les pas 27 des vis se resserrent et s'imbriquent plus intimement.

Le dispositif d'extrusion comprend ici le dernier secteur 26 de l'extrudeuse dans lequel le pas 28 des vis se resserre encore pour exercer une poussée ou pression sur la pâte. Il comprend également un tube de chauffage 7 relié à l'extrudeuse, rempli d'éléments géométriques de mélange statique 9 et enveloppé d'un double manteau 8, ainsi qu'une filière d'extrusion constituée d'un court segment de tube cylindrique à double manteau 11 rempli d'éléments géométriques de mélange statique 29 et terminé par un bec amovible 30 incliné en direction d'une bande transporteuse 14 dans l'enceinte 12.

Dans cette seconde forme de réalisation du présent appareil, l'enceinte 12 est également reliée à des moyens de pompage constitués d'une pompe à palette 13. Elle renferme également l'extrémité aval de la filière 11, la bande transporteuse 14 et un prébroyeur 15. Elle est reliée avec l'extérieur par l'intermédiaire d'un sas 16 débouchant sur un moulin à marteaux 17.

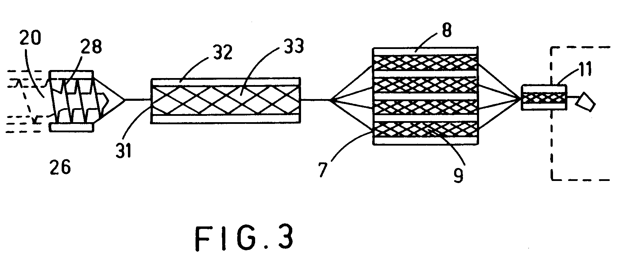

Dans la variante représentée à la figure 3, le dispositif de pétrissage et chauffage en continu de la forme de réalisation de l'appareil selon la figure 2 comprend en outre un tube d'attente 31 branché entre l'extrudeuse et le tube de chauffage, rempli d'éléments géométriques de mélange statique 33 constitués de croisillons métalliques imbriqués les uns dans les autres et enveloppé d'un double manteau 32.

Dans cette variante, le tube d'attente 7 est formé de quatre segments parallèles remplis chacun d'éléments géométriques de mélange statique 9 et enveloppés d'un double manteau commun 8.

Les exemples ci-après sont présentés à titre d'illustration du procédé selon la présente invention. Les pourcentages y sont donnés en poids.

### Exemple 1

On prépare un hydrolysat de protéines végétales par cuisson à l'acide chlorhydrique de tourteaux d'arachides, neutralisation, filtration, décoloration partielle et séchage jusqu'à une teneur en eau résiduelle de 2%. A l'aide d'un appareil tel que décrit ci-dessus en référence à la figure 1 du dessin, on prépare en continu dans un premier convoyeur à deux vis d'archimède jumelées un mélange sec comprenant 82% de cet hydrolysat de protéines végétales, 4,5% de graisse de poulet, 0,5% de glucose, 3% de cysteine et 5% d'inosinemonophosphate. On y ajoute ensuite 5% d'eau pour obtenir 100% d'un mélange pâteux.

On introduit le mélange pâteux en continu dans un second convoyeur à deux vis d'archimède jumelées entouré d'un double manteau où circule de l'huile chaude. Dans ce second convoyeur, on plastifie le mélange par pétrissage et chauffage et l'on obtient une pâte qui est portée et maintenue ainsi à une température de 120°C sous 1 bar durant 2 min.

A l'aide d'une pompe volumétrique exerçant une pression de 10 bar sur la pâte délivrée par le second convoyeur, on propulse la pâte au travers d'un tube de chauffage à double manteau rempli d'éléments géométriques de mélange statique constitués de croisillons métalliques imbriqués les uns dans les autres. On porte ainsi la température de la pâte à 125°C et on l'extrude immédiatement au travers d'une filière à ouverture cylindrique de 5 mm de diamètre enveloppée d'un double manteau et maintenue aussi à 125°C. La filière débouche dans une enceinte maintenue sous une pression de 10 mbar. Le boudin de pâte extrudée s'expanse fortement et se refroidit brusquement sous l'effet de la vaporisation de l'eau ajoutée qu'il contient et de la détente de cette vapeur.

On sèche ainsi le boudin de pâte extrudée à une teneur en eau résiduelle de environ 2% et on le refroidit à environ 50°C. température à laquelle la réaction, dite de Maillard, est pratiquement arrêtée. Le boudin expansé présente un diamètre de environ 80 mm et une densité apparente de 120 g/l. On le recueille sur une bande de transport à l'intérieur de l'enceinte et on le conduit à un prébroyeur à râteaux rotatifs avant de le faire sortir de l'enceinte par un sas. On le broye alors à l'aide d'un moulin à marteaux muni d'une grille à mailles de 2 mm d'ouverture.

On obtient ainsi un agent aromatisant sous forme d'une poudre dorée à écoulement libre présentant une densité apparente de 450 g/l et capable de conférer à un potage ou une sauce un goût de poulet rôti.

### Exemple 2

Al'aide d'un appareil du type décrit ci-dessus en référence à la figure 2 du dessin, on introduit en continu dans un premier secteur de chargement en ingrédients secs d'une extrudeuse à double vis 10 kg/h d'un mélange sec comprenant 53% d'un hydrolysat acide de tourteaux d'arachide non décoloré contenant 2% d'eau, 26% d'extrait de levure contenant 2% d'eau, 6% de glutamate monosodique, 1,3% de chlorure de sodium et 1,2% de thiamine.

L'extrudeuse comprend six secteurs de 16cm de longueur à doubles manteaux indépendants et deux vis présentant un diamètre extérieur de 37 mm et un diamètre intérieur de 22 mm. Son volume libre est de environ 11. On fait tourner les vis à 40 tours/min.

On introduit en continu dans un deuxième secteur de chargement en ingrédient liquide de cette extrudeuse 12,5% d'un sirop de glucose à 20% de matière sèche. On obtient 100% d'un mélange pâteux que l'on plastifie par pétrissage et chauffage et que l'on fait réagir dans les troisième, quatrième et cinquième secteurs de l'extrudeuse. La pâte obtenue est ainsi maintenue à une température de environ 100°C durant 3 min sous 1,3 bar.

Dans-le sixième secteur de l'extrudeuse où le pas des vis se resserre fortement, on exerce une pression sur la pâte de manière qu'elle puisse franchir un tube de chauffage composé de quatre segments parallèles cylindriques de 450 mm de longueur et 10 mm de diamètre intérieur remplis d'éléments géométriques de mélange statique et enveloppés d'un double manteau commun, tout en conservant suffisamment d'énergie pour se prêter à l'opération subséquente de séchage et refroidissement par extrusion.

Dans ce tube de chauffage, on porte rapidement la température de la pâte à 118°C. On augmente même ensuite cette température à 125°C dans la fière d'extrusion qui suit le tube de chauffage. Cette filière est constituée elle-même d'un segment de tube cylindrique de 500 mm de longueur et 8 mm de diamètre intérieur, enveloppé d'un double manteau, rempli d'éléments géométriques de mélange statique et terminé par un bec amovible de 5 mm de diamètre intérieur incliné vers le bas.

On extrude ainsi la pâte en direction d'une bande transporteuse située au-dessous de l'extrémité aval de la filière dans une enceinte maintenue à une pression de 15 mbar. Le boudin extrudé subit une expansion, un séchage et un refroidissement instantanés, par vaporisation et détente de l'eau ajoutée qu'il contient, au moment où il pénètre dans l'enceinte sous pression réduite. On le sèche ainsi jusqu'à une humidité résiduelle de environ 2,5% tout en le refroidissant à environ 50―60°C, température à laquelle la réaction, dite de Maillard, est pratiquement arrêtée.

Le boudin extrudé se rigidifie rapidement lors de son transport dans ladite enceinte et on peut le prébroyer à l'aide de râteaux rotatifs avant de le faire sortir de l'enceinte par un sas. Le boudin prébroyé présente une densité apparente de 150 g/l. On le broye ensuite à l'aide d'un moulin à marteaux muni d'une grille à mailles de 2 mm d'ouverture.

On obtient ainsi un agent aromatisant sous forme d'une poudre brune à écoulement libre présentant une densité apparente de 500 g/l capable de conférer à un potage ou une sauce un goût de viande de boeuf bouilli.

### Exemple 3

On procède de manière semblable à celle décrite à l'exemple 2, à l'exception du fait que l'on introduit 50 kg de matière première par h dans I'extrudeuse. Afin que le temps de réaction demeure de environ 3 min malgré la forte augmentation du débit de l'extrudeuse dont on fait tourner les vis à 200 tours/min, on prolonge la réaction au-delà de l'extrudeuse dans un tube d'attente à double manteau. Ce tube, branché entre l'extrudeuse et le tube de chauffage, présente une longueur de 1 m et un diamètre de 36 mm. Il est rempli d'éléments géométriques de mélange statique constitués de croisillons métalliques imbriqués les uns dans les autres.

On obtient ainsi un agent aromatisant en tous points comparable à celui de l'exemple 2.

## Revendications

1. Procédé de fabrication d'un agent aromatisant dont le goût rappelle celui de la viande, dans lequel on fait réagir par chauffage un mélange pâteux contenant au moins une source d'acides aminés libres et des additifs comprenant au moins un sucre réducteur, caractérisé par le fait que l'on mélange, en % en poids, 70―95% d'une source d'acides aminés libres présentant une teneur en eau de 1―3%, 1―25% desdits additifs et de l'eau pour obtenir un mélange pâteux contenant 5―12% d'eau, on plastifie le mélange pâteux par pétrissage et chauffage, on fait réagir le mélange plastifié à une température de 80―140°C sous une pression de 1―100 bar durant 30 s ― 30 min et l'on sèche et refroidit le produit de réaction par extrusion et détente dans une enceinte sous pression réduite de 5―50 mbar.

2. Procédé selon la revendication 1, caractérisé par le fait que ladite source d'acides aminés libres comprend, en % en poids dudit mélange, 40―95% d'un hydrolysat de protéines et 0―30% d'un extrait de levure, lesdits additifs comprennent 0,5―10% d'un sucre réducteur, 0,5―10% d'une substance contenant du soufre, 0―20% de glutamate monosodique et 0―5% d'inosine monophosphate, et l'on incorpore en outre audit mélange 0―40% de maltodextrine et 0―15% de graisse.

3. Procédé selon la revendication 1, caractérisé par le fait que l'on fait réagir le mélange plastifié à une température de 80―125°C et l'on ajuste sa température à 125―140°C avant de l'extruder.

4. Procédé selon la revendication 1, caractérisé par le fait que l'on obtient un produit de réaction extrudé expansé présentant une teneur en humidité résiduelle de 1―3% et une densité apparente de 100―200 g/l et on le broye de manière à obtenir une poudre ou un granulé présentant une densité apparente de 450―750 g/l.

5. Appareil pour la mise en oeuvre du procédé selon la revendication 1, caractérisé par le fait qu'il comprend un dispositif de mélange en continu (1―3; 21―22), un dispositif de pétrissage et chauffage en continu (4―5; 23―25) et un dispositif d'extrusion (6; 26; 7―11) débouchant dans une enceinte (12) reliée à des moyens de pompage (13), le dispositif de mélange en continu comprend un premier secteur de chargement en ingrédients secs (21) et un deuxième secteur de chargement en ingrédient liquide (22) d'une extrudeuse à vis simple ou double (20) et le dispositif de pétrissage et chauffage en continu comprend au moins un troisième secteur depétrissage et chauffage (23―25) de ladite extrudeuse, chaque secteur étant pourvu d'un double manteau indépendant, et le dispositif d'extrusion comprend au moins un dernier secteur (26) de ladite extrudeuse enveloppé d'un double manteau indépendant, au moins un tube de chauffage (7) relié à l'extrudeuse, rempli d'éléments géométriques de mélange statique (9) et enveloppé d'un double manteau (8), ainsi qu'une filière d'extrusion (11) reliée au tube de chauffage (7).

6. Appareil selon la revendication 5, caractérisé par le fait que ledit dispositif de pétrissage et chauffage en continu comprend en outre un tube d'attente (31) branché entre l'extrudeuse (26) et le tube de chauffage (7), rempli d'éléments géométriques de mélange statique (33) et enveloppé d'un double manteau (32).

## Claims

1. Process for manufacturing a flavouring agent with a taste resembling that of meat, in which a paste-like mixture containing at least one source of free amino acids and additives including at least one reducing sugar is made to react by heating, characterized in that there is mixed, in % by weight, 70-95 % of a source of free amino acids having a water content of 1-3 %, 1-25 % of the said additives and water so as to obtain a paste-like mixture containing 5-12 % water, the paste-like mixture is plasticized by kneading and heating, the plasticized mixture is made to react at a temperature of 80-140°C under a pressure of 1-100 bar for 30 s - 30 min and the reaction product is dried and cooled by extrusion and expansion in a chamber under a reduced pressure of 5-50 mbar.

2. Process according to claim 1, characterized in that the said source of free amino acids includes, in % by weight of the said mixture, 40-95 % of a protein hydrolysate and 0-30 % of a yeast extract, the said additives including 0.5-10 % of a reducing sugar, 0.5-10 % of a sulfur-containing substance, 0-20 % of monosodium glutamate and 0-5 % of inosine monophosphate, and there are additionally incorporated in the said mixture 0-40 % of maltodextrin and 0-15 % of fats.

3. Process according to claim 1, characterized in that the plasticized mixture is made to react at a temperature of 80-125°C and its temperature is adjusted to 125-140°C before the extruder.

4. Process according to claim 1, characterized in that an expanded extruded reaction product is obtained having a residual moisture content of 1-3 % and an apparent density of 100-200 g/l and the mixture is ground so as to obtain a powder or granulate having an apparent density of 450-750 g/l.

5. Apparatus for implementing the process according to claim 1, characterized in that it comprises a continuous mixing device (1-3; 21-22), a continuous kneading and heating device (4-5; 23-25) and an extrusion device (6; 26; 7-11) opening into a chamber (12) connected to pumping means (13), the continuous mixing device comprises a first zone for loading dry ingredients (21) and a second zone for loading a liquid ingredient (22) of a single or twin screw extruder (20) and the continuous kneading and heating device includes at least a third kneading and heating zone (23-25) of the said extruder, each zone being provided with an independent double jacket, and the extrusion device includes at least one last zone (26) of the said extruder surrounded by an independent double jacket, at least one heating tube (7) connected to the extruder filled with geometric static mixing elements (9) and surrounded by a double jacket (8), as well as an extrusion die (11) connected to the heating tube (7).

6. Apparatus according to claim 5, characterized in that the said continuous kneading and heating device additionally includes a holding tube (31) connected between the extruder 26) and the heating tube (7), filled with geometric static mixing elements (33) and surrounded by a double jacket (32).

## Patentansprüche

1. Verfahren zur Herstellung eines Geschmacksstoffes, dessen Geschmack demjenigen von Fleisch ähnlich ist, bei welchem Verfahren man durch Erhitzen ein teigartiges Gemisch zur Reaktion bringt, welches wenigstens eine Quelle für freie Aminosäuren sowie Zusatzstoffe enthält, welche letzteren wenigstens einen reduzierenden Zucker umfassen, dadurch gekennzeichnet, daß man, bezogen auf das Gewicht, 70 bis 95 % einer Quelle für freie Aminosäuren mit einem Wassergehalt von 1 bis 3 %, 1 bis 25 % der genannten Zusatzstoffe und Wasser zur Erzielung eines teigartigen Gemisches mit einem Wassergehalt von 5 bis 12 % miteinander vermischt, daß man das teigartige Gemisch durch Kneten und Erhitzen plastifiziert, daß man das plastifizierte Gemisch bei einer Temperatur von 80 bis 140°C und unter einem Druck von 1 bis 100 bar während 30 s bis 30 min zur Reaktion bringt und daß man das Reaktionsprodukt durch Strangpressen und Entspannen in einen unter einem verringerten Druck von 5 bis 50 mbar stehenden Behälter trocknet und abkühlt.

2. Verfahren nach Anspruch 1, dadurch gekennzeichnet, daß die Quelle für freie Aminosäuren, bezogen auf das Gewicht des Gemisches, 40 bis 95 % eines Proteinhydrolysates und 0 bis 30 % eines Hefeextraktes umfaßt, daß die Zusatzstoffe 0,5 bis 10 % eines reduzierenden Zuckers, 0,5 bis 10 % einer schwefelhältigen Substanz, 0 bis 20 % Mononatriumglutamat und 0 bis 5 % Inosinmonophosphat umfassen und daß man dem Gemisch außerdem 0 bis 40 % Maltosen-Dextrin und 0 bis 15 % Fett einverleibt.

3. Verfahren nach Anspruch 1, dadurch gekennzeichnet, daß man das plastifizierte Gemisch bei einer Temperatur von 80 bis 125°C zur Reaktion bringt und daß man dessen Temperatur vor dem Strangpressen auf 125 bis 140°C einstellt.

4. Verfahren nach Anspruch 1, dadurch gekennzeichnet, daß man ein expandiertes, extrudiertes Reaktionsprodukt erhält, welches einen Gehalt an Restfeuchtigkeit von 1 bis 3 % und ein Schüttvolumen von 100 bis 200 g/l aufweist, und daß man dieses Reaktionsprodukt derart zerkleinert, daß man ein Pulver oder ein Granulat mit einem Schüttvolumen von 450 bis 750 g/l erhält.

5. Vorrichtung zur Durchführung des Verfahrens nach Anspruch 1, dadurch gekennzeichnet, daß sie eine Einrichtung (1-3; 21-22) zum kontinuierlichen Mischen, eine Einrichtung (4-5; 23-25) zum kontinuierlichen Kneten und Erhitzen und eine Strangpreßeinrichtung (6; 26; 7-11) umfaßt, welche letztgenannte in einen mit Pumpeinrichtungen (13) verbundenen Behälter (12) mündet, daß die Einrichtung zum kontinuierlichen Mischen einen ersten Sektor (21) für die Beschickung mit trockenen Komponenten und einen zweiten Sektor (22) für die Beschickung mit dem flüssigen Bestandteil einer Strangpresse (20) mit Einfach- oder Doppelschnecke umfaßt, und daß die Einrichtung zum kontinuierlichen Kneten und Erhitzen wenigstens einen dritten Sektor (23-25) zum Kneten und Erhitzen der genannten Strangpresse umfaßt, wobei jeder Sektor mit einer unabhängigen, doppelten Ummantelung ausgestattet ist und daß die Strangpreßeinrichtung wenigstens einen letzten, mit einer unabhängigen, doppelten Ummantelung eingehüllten Sektor (26) der genannten Strangpresse, wenigstens ein mit der Strangpresse verbundenes Heizrohr (7), welches mit geometrischen Elementen (9) für ein statisches Vermischen gefüllt und mit einer doppelten Ummantelung (8) ausgestattet ist, sowie ein mit dem Heizrohr (7) verbundenes Spritzmundstück (11) umfaßt.

6. Vorrichtung nach Anspruch 5, dadurch gekennzeichnet, daß die Einrichtung zum kontinuierlichen Kneten und Erhitzen außerdem ein Warterohr (31) umfaßt, welches zwischen der Strangpresse (26) und dem heizrohr (7) angeschlossen ist und welches mit geometrischen Elementen (33) für ein statisches Vermischen gefüllt und mit einer doppelten Ummantelung (32) ausgestattet ist.
